Europäisches Patentamt

European Patent Office

Office européen des brevets

(19)

(11) **EP 0 721 570 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(21) Anmeldenummer: **94925354.6**

(22) Anmeldetag: **09.09.1994**

(51) Int Cl.6: **G01C 21/20**, G01S 5/14

(86) Internationale Anmeldenummer:
**PCT/DE94/01036**

(87) Internationale Veröffentlichungsnummer:
**WO 95/09348 (06.04.1995 Gazette 1995/15)**

(54) **ORTUNGS- UND NAVIGATIONSGERÄT MIT SATELLITENSTÜTZUNG**

POSITION-FINDING AND NAVIGATION EQUIPMENT WITH SATELLITE BACK-UP

SYSTEME DE REPERAGE ET DE NAVIGATION ASSISTE PAR SATELLITE

(84) Benannte Vertragsstaaten:
**CH DE ES FR GB IT LI SE**

(30) Priorität: **28.09.1993 DE 4332945**

(43) Veröffentlichungstag der Anmeldung:
**17.07.1996 Patentblatt 1996/29**

(73) Patentinhaber: **ROBERT BOSCH GMBH**
**70442 Stuttgart (DE)**

(72) Erfinder: **KREFT, Peter**
**D-31137 Hildesheim (DE)**

(74) Vertreter: **Friedmann, Jürgen, Dr.-Ing. et al**
**c/o Robert Bosch GmbH,**
**Postfach 30 02 20**
**70442 Stuttgart (DE)**

(56) Entgegenhaltungen:
EP-A- 0 496 538          EP-A- 0 519 630
WO-A-93/05587          US-A- 4 837 700

**Beschreibung**

Stand der Technik

Die Erfindung geht aus von einem Ortungs- und Navigationsgerät für ein Kraftfahrzeug nach der Gattung des Hauptanspruchs. Es sind schon verschiedene Ortungs- und Navigationsgeräte bekannt, bei denen eine aktuelle Fahrzeugposition auf einer Straßenkarte eines Anzeigegerätes dargestellt wird und die Position laufend mitgekoppelt wird. Ein derartiges Gerät ist beispielsweise aus Bosch Technische Berichte, Band 8, 1986, Heft 1/2, "EVA - ein autarkes Ortungs- und Navigationssystem für Landfahrzeuge", Seite 7 - 14, bekannt. Ferner ist ein Satelliten-Navigationssystem unter dem Namen GPS-System (Global Position System) bekannt, das aufgrund von empfangenen Positionsdaten von wenigstens drei oder vier Satelliten am Himmel eine terristrische Position errechnet. Die Positionsbestimmung mit dem GPS-System hat für die freigegebenen allgemeinen Anwendungen nur eine Ortungsgenauigkeit von ca. 100 m. Des weiteren hängt die Genauigkeit auch von der Höhenposition und der Anzahl der empfangenen Satelliten ab. In Stadtgebieten, bei denen ein einwandfreier Satellitenempfang nicht immer gewährleistet ist, ist daher eine Positionsbestimmung nicht immer möglich. Andererseits kann es beim "Travelpilot" vorkommen, daß durch Magnetisierungseinflüsse des Fahrzeugs oder starke magnetische Störfelder die Magnetfeldsonde gestört wird. Beim Befahren von nicht digitalisierten Gebieten oder beim Transport des Fahrzeuges auf einer Fähre oder der Eisenbahn geht die Ortung verloren. Das Navigationsgerät muß wieder neu aufgesetzt werden. Dieses ist zwar mit wenigen Tastenbedienungen durchführbar, erfolgt aber nicht automatisch. Dadurch ist der Benutzungskomfort eingeschränkt.

Aus der WO 93/05587 ist ein Navigationssystem bekannt, das sowohl ein relatives Positionierungssystem (RPS) als auch ein System zur absoluten Positionsbestimmung (APS), beispielsweise das Global Positioning System (GPS) aufweist. Da die Ortung der beiden Systeme fehlerbehaftet ist, wird sowohl für die RPS-Ortung als auch für die APS-Ortung ein Streubereich ermittelt. Diese Streubereiche werden jedoch bei Abweichung der ermittelten Fahrzeugpositionen derart zur Deckung gebracht, daß der vom RPS-System ermittelte Streubereich den vom APS-System ermittelten Streubereich mehr oder weniger zur Deckung überlagert wird. Das RPS-System wird somit an die Ortungsgenauigkeit des APS-Systems angepaßt.

Vorteile der Erfindung

Das erfindungsgemäße Ortungs- und Navigationsgerät mit den Merkmalen des Anspruchs 1 hat demgegenüber den Vorteil, daß bei Ortungsverlust oder Fehlortung, die auf der Straßenkarte der Anzeige sofort erkennbar ist, mit Hilfe des Satelliten-Navigationsgerätes eine automatische Korrektur der Position durchführbar ist. Besonders vorteilhaft ist, daß auch das Aufsetzen des Navigationsgerätes, d. h. die Initialisierung der augenblicklichen Position durch das Satelliten-Navigationsgerät automatisch und ohne Dazutun des Fahrers erfolgt. Dadurch wird der Fahrer weniger vom Verkehrsgeschehen abgelenkt.

Durch die in den abhängigen Ansprüchen aufgeführten Maßnahmen sind vorteilhafte Weiterbildungen und Verbesserungen des im Hauptanspruch angegebenen Ortungs- und Navigationsgerätes möglich.

Durch die Bestimmung des Streubereiches für die Satellitenortung ist vorteilhaft der Fehler abgrenzbar, der bei der genauen Positionsbestimmung des Fahrzeuges erfaßbar ist. Da die Genauigkeit der Satellitenortung u. a. wesentlich von der Anzahl und der Konstellation der gleichzeitig empfangenen Satelliten abhängt, kann ein relativ zuverlässiger Bereich für die Fahrzeugposition ermittelt werden. Die Verfeinerung/Optimierung der Fahrzeugposition erfolgt durch Vergleich (Map Matching) nach einer Plausibilitätsprüfung auf der dargestellten Straßenkarte. Befindet sich in dem Streubereich der Satellitenortung die laut Koppelortung und Map Matching momentan befahrene Straße, dann kann vorteilhaft davon ausgegangen werden, daß die Fahrzeugposition, die vom System (Ortungs- und Navigationssystem) verwaltet wird, korrekt ist.

Für Überprüfungszwecke ist es auch günstig, wenn die Satellitenortung auf der Anzeige ausgegeben wird. Dadurch kann sich auch der Fahrer ein Bild machen von der gemessenen Position in Relation zu der dargestellten Straßenkarte. Auch durch einfaches manuelles Korrigieren mittels entsprechender Cursortasten kann dann die Position des Fahrzeuges auf der dargestellten Straßenkarte korrigiert werden.

Günstig ist vor allem ein automatisches Aufsetzen des Ortungs- und Navigationssystem mit Hilfe der Satellitenortung. Der Fahrer des Fahrzeugs muß das Aufsetzen nicht mehr von Hand durchführen und wird damit auch nicht vom Verkehrsgeschehen abgelenkt.

Zeichnung

Ein Ausführungsbeispiel der Erfindung ist in der Zeichnung dargestellt und wird in der nachfolgenden Beschreibung näher erläutert. Es zeigen Figur 1 ein Blockschaltbild, Figur 2 ein Flußdiagramm für den Funktionsablauf, und Figur 3 - 6 zeigen Beispiele von verschiedenen Korrekturmaßnahmen.

Beschreibung des Ausführungsbeispiels

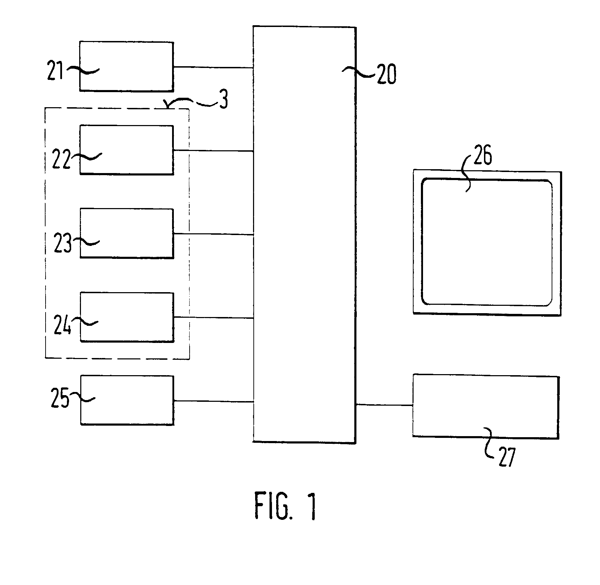

Das Blockschaltbild der Figur 1 zeigt eine Steuerung 20, die mit einer Anzeige 26 und Bedienelementen 27 verbunden ist. Eingangsseitig ist die Steuerung 20 mit verschiedenen Sensoren 3 verbunden, wie einem Wegsensor 22, einem Winkelsensor 23, einem Kompaß 24 sowie einer Satelliten-Navigationseinrichtung 25.

Des weiteren ist die Steuerung 20 mit einem Kartenspeicher 21 verbunden, auf dem die Straßenkarten vornehmlich digital gespeichert sind. Die Steuerung 20 enthält einen Mikrorechner sowie interne Speicher, ein derartiges Gerät ist beispielsweise durch den "Travelpilot" bekannt und muß daher im einzelnen nicht näher beschrieben werden. Als Kartenspeicher 21 wird dabei ein Compact-Disk-Speicher verwendet, auf dem u. a. die Straßenkartendaten von Deutschland gespeichert sind. Mittels der Bedienelemente 27 werden Straßenkartenausschnitte ausgewählt und in einem gewünschten Maßstab auf der Anzeige 26 dargestellt. Die Fahrzeugposition auf der Straßenkarte wird mittels eines blinkenden Pfeils angezeigt, unter dem sich die Straßenkarte weiterbewegt, wenn das Fahrzeug vorwärts fährt. Die Berechnung der momentanen Position erfolgt dabei mittels zweier Radsensoren auf einer Achse, aus deren digitalen Impulse Wegstrecken und Winkelbewegungen des Fahrzeuges berechnet werden. Zusätzlich ist ein Zweiachsmagnetometer im Fahrzeug angeordnet, das die Fahrtrichtung bezüglich der Nordrichtung aus dem Erdmagnetfeld ermittelt. Durch Map Matching wird die geographische Kompaßposition mit der mitgekoppelten Position auf der Karte verglichen und durch eine Plausibilitätsprüfung die aktuelle Fahrzeugposition auf der Straße festgelegt.

Eine Satelliten-Navigationseinrichtung 25 ist als GPS-Empfänger (Global Position System) bekannt. Der GPS-Empfänger 25 empfängt je nach seiner Position auf der Erdoberfläche von wenigstens drei Satelliten des GPS-Systems deren Signale und berechnet aufgrund von Signallaufzeiten seine Position auf der Erdoberfläche aus. Diese Positionsangabe wird in die Steuerung 20 eingegeben.

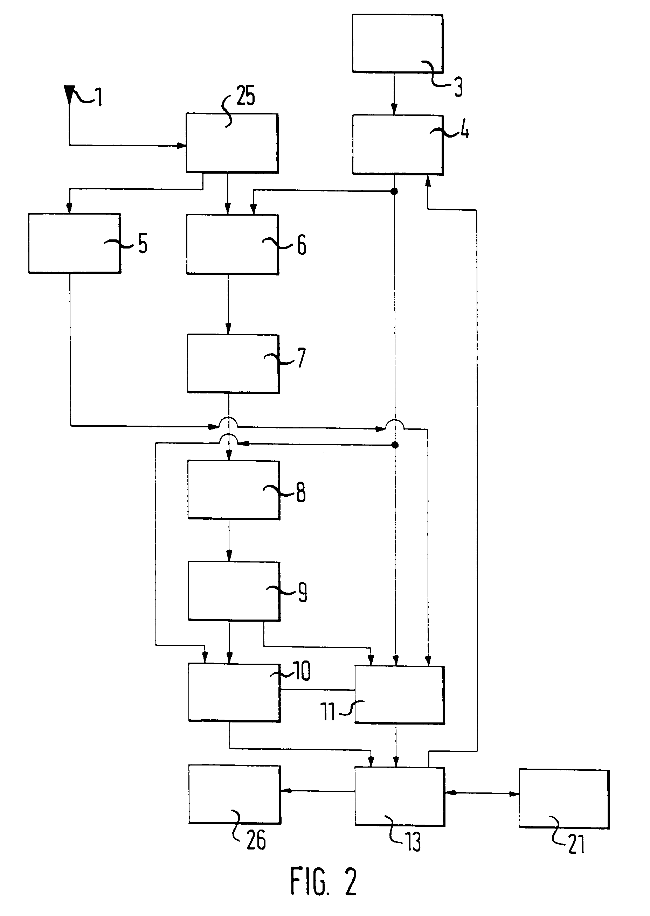

Im folgenden wird anhand eines Flußdiagramms für den Funktionsablauf entsprechend Figur 2 die Funktionsweise beschrieben. Zunächst wird mit Hilfe der Koppelortungssensoren 3 bei dem bekannten kartengestützten Ortungs- und Navigationsgerät in Position 4 eine Koppelortung für das Fahrzeug durchgeführt. Dabei erhält die Koppelortung aus einem Kartenspeicher 21 auf einer Compact-Disk (CD) gespeicherte Straßendaten, die von einer Kartenaufbereitungseinheit 13 für die Steuerung 20 aufbereitet wurden. Diese aufbereiteten Straßendaten werden auf der Anzeige 26 als Straßenkarte angezeigt. Die Koppelortung 4 überprüft in einer Korrekturstufe 11 die Plausibilität der ermittelten Fahrzeugposition und gibt die Fahrzeugposition an die Kartenaufbereitungseinheit 13. Auf der Anzeige 26 erscheint dann beispielsweise für die Fahrzeugposition ein blinkender Pfeil auf der gerade befahrenen Straße.

Parallel zu diesem per se bekannten Mitkopplungsverfahren empfängt nun der Satellitenempfänger 25 über die Antenne 1 die Satellitensignale und bestimmt daraus zunächst unabhängig von der Koppelortung eine Position für das Fahrzeug. In Position 6 wird die Satellitenortung mit der Koppelortung synchronisiert. Dieses ist erforderlich, da sich während der Berechnungszeit das Fahrzeug weiterbewegt und zwischenzeitlich eine andere Position eingenommen hat. Nach einer Transformation der Werte in das Koordinatensystem der Koppelortung (Position 7) wird in Position 8 nunmehr aus diesen Werten ein Differenzvektor $\bar{V}$ berechnet, der die Differenz zwischen der Koppelortung und der Satellitenortung angibt.

Das verfügbare Satellitensystem GPS ist mit Einschränkung allen frei zugänglich. Die Einschränkung besteht darin, daß die Genauigkeit der durch die Satelliten bestimmte Position einen Streubereich aufweist. Der Streubereich ist abhängig von der Anzahl der gleichzeitig empfangenen Satelliten und kann einen Kreis mit 100 m Radius oder erheblich mehr haben. Diese für die Positionsbestimmung eines Fahrzeuges zu große Toleranz kann nun mit Hilfe eines Tiefpaßfilters (Position 9) verbessert werden. Dabei wird die Zeitkonstante des Tiefpaßfilters so gewählt, daß Störsignale des GPS-Systems einerseits zum Teil unterdrückt werden, andererseits ein Ortungsverlust durch die Bewegung des Fahrzeuges möglichst schnell erkannt wird. Zwischen diesen beiden Extremwerten muß ein Kompromiß gebildet werden, der vorteilhaft empirisch ermittelt wird. In Position 10 wird nun der durch den Tiefpaß gefilterte Wert verwendet, um eine optimierte Satelliten-Ortungsposition zu berechnen. Da aufgrund von empirisch ermittelten Werten bei mindestens vier (in Ausnahmefällen auch 3) gleichzeitig empfangenen Satelliten der Streubereich relativ genau abgeschätzt werden kann, ergibt sich somit ein Gütefaktor für die durch die Satelliten ermittelte Position. Aufgrund von empirisch ermittelten Werten kann nun ein Streubereich dieser Position ermittelt werden. Die Ermittlung des Streubereiches wird in Position 5 durchgeführt. Die in Position 10 ermittelten Werte werden auf die Kartenaufbereitungseinheit 13 gegeben. Auf der Anzeige 26 kann nun die Fahrzeugposition und/oder zusätzlich die durch den Satelliten ermittelte Position dargestellt werden.

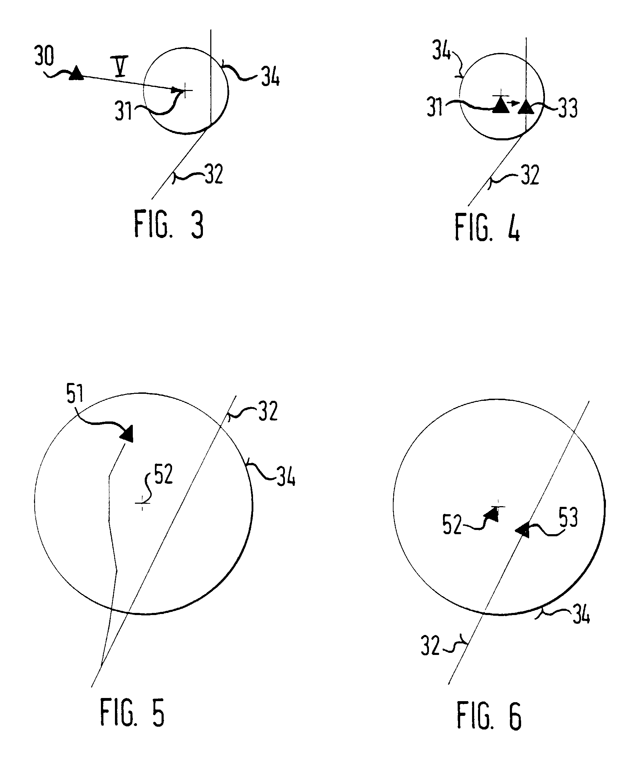

Ein erstes Beispiel für die Positionskorrektur wird in Figur 3 dargestellt. Prinzipiell gilt, daß keine Satelliten-Navigation durchgeführt wird, wenn sich das Fahrzeug tatsächlich auf einer vorgesehenen Straße befindet. Figur 3 zeigt eine Straße 32, ein neben der Straße befindliches Fahrzeug mit einer Koppelortung 30 sowie eine Satellitenortung 31. Um die Satellitenortung 31 ist ein Streubereich 34 als Kreis dargestellt, der den Unsicherheitsbereich für die Satellitenortung 31 darstellen soll und mit Hilfe des Gütefaktors bestimmt wurde. Zwischen der Koppelortung 30 und der Satellitenortung 31 ist ein Vektor $\bar{V}$ gezeichnet, der die Abweichung zwischen den beiden Ortungsverfahren darstellt. Da die Koppelortungsposition außerhalb des Streubereichs der Satellitenortung liegt, wird nun davon ausgegangen, daß die Koppelortung 30 falsch ist. Dieses kann beispielsweise dadurch entstehen, daß durch Magnetisierungseinflüsse der Fahrzeugkompaß 24 eine Mißweisung ermittelt hat. Es kann aber auch sein, daß das Fahrzeug mit einer Fähre oder der Bahn transportiert wurde und damit seine Koppelortung verloren hat. Es erfolgt nun eine Übernahme der GPS-Position als neue Koppelortungsposition (Stützung) mit nachfolgender Kartenstützung (Map Matching), wie nachfolgend zu Figur 3 beschrieben.

Es wird in Figur 3 angenommen, daß das Fahrzeug seine Koppelortung neu aufsetzen muß. Die Position für die Koppelortung 30 wird nun durch die Satellitenortung entsprechend der Figur 4 korrigiert. Figur 4 zeigt nun, daß die neue Fahrzeugposition durch die Satellitenortung 31 bestimmt wird. Um die Satellitenortung 31 ist wieder der Streubereich 34 eingezeichnet. Innerhalb des Streubereiches 34 verläuft nun die Straße 32, auf der sich das Fahrzeug nach entsprechender Plausibilitätsprüfung tatsächlich befindet. Nun setzt innerhalb des Streubereiches 34 durch Map Matching eine Korrektur ein, so daß das Fahrzeug auf der Straßenkarte von der Satellitenortung 31 auf die aktuelle Position 33 parallel verschoben wird. Diese so gefundene aktuelle Position 33 wird für die weitere Koppelortung weitergeführt. Solange innerhalb gewisser Grenzen sich das Fahrzeug nun innerhalb des Streubereiches 34 und auf einer Straße befindet, erfolgt keine GPS-Korrektur, da in diesem Bereich das Fahrzeug nur durch die gespeicherten Kartendaten in Verbindung mit den Fahrzeugsensoren und dem Kompaß geführt wird.

Figur 5 zeigt ein Ausführungsbeispiel, bei dem zwar ein Ortungsverlust der Koppelortung eingetreten ist, das Fahrzeug befindet sich jedoch noch innerhalb des Satellitenstreubereiches. Das Koppel-Ortungssystem findet aber wegen des Verlustes der Korrektur-Position nicht mehr auf die Straße 32 zurück. Mit Hilfe des Satellitenempfängers 25 wird wieder eine Ortungsposition 52 und deren Streubereich für das Fahrzeug (Figur 5, Figur 6) berechnet. Entsprechend Figur 6 wird nun durch Map Matching die Satellitenposition 52 als aktuelle Fahrzeugposition angenommen und das Fahrzeug parallel hierzu in Position 53 auf die Straße 32 gesetzt. In diesem Bereich wird nun ähnlich wie nach Figur 4 die weitere Mitkopplung durch das Ortungs- und Navigationsgerät des Fahrzeuges fortgeführt. Vorzugsweise wird laufend die GPS-Position und deren Streubereich berechnet, um damit die Koppelortung zu kontrollieren.

Diese an sich vollautomatisch arbeitende Ortungs- und Navigationseinrichtung benötigt kein manuelles Aufsetzen des Fahrzeugs mehr. In weiterer Ausgestaltung der Erfindung ist jedoch vorgesehen, Cursortasten zur Steuerung der Fahrzeugposition durchzuführen, um beispielsweise eine Feinjustierung durchzuführen.

## Patentansprüche

1. Ortungs- und Navigationsgerät für ein Fahrzeug mit einem Magnetfeldkompaß, einem Wegsensor und/oder Winkelsensor, einem Speicher für Straßenkartendaten, einer Anzeige für eine Straßenkarte, einem Satellitenempfänger zur Bestimmung einer Fahrzeugposition durch eine Satellitenortung und mit einer Steuerung zur Bestimmung einer Fahrzeugposition durch eine Koppelortung und Darstellung dieser Fahrzeugposition auf der Straßenkarte der Anzeige, wobei die Steuerung für die Satellitenortung einen Streubereich bildet, dadurch gekennzeichnet, daß die Steuerung (20) Mittel aufweist, mit denen der Streubereich (34) der Satellitenortung (31) bestimmbar ist, daß die Steuerung (20) zur Prüfung ausgebildet ist, ob die Fahrzeugposition innerhalb oder außerhalb des Streubereiches der Satellitenortung (31) liegt, daß die Steuerung (20) bei einer durch eine Koppelortung (30) ermittelten Fahrzeugposition außerhalb des Streubereiches (34) der Satellitenortung (31) zunächst die Fahrzeugposition der Koppelortung (30) auf die der Satellitenortung (31) verschiebt, und daß dann die Steuerung (20) nach einer Plausibilitätsprüfung mittels des 'map matching' die verschobene Fahrzeugposition (31) in eine aktuelle Position (33; 53) auf einer Straße (32) der dargestellten Straßenkarte verschiebt, die zur Fahrtrichtung des Fahrzeugs etwa parallel verläuft.

2. Ortungs- und Navigationsgerät nach Anspruch 1, dadurch gekennzeichnet, daß die Mittel einen Tiefpaß aufweisen, dessen Zeitkonstante unter Berücksichtigung der Genauigkeit der Satellitenortung und der Fahrzeuggeschwindigkeit wählbar ist.

3. Ortungs- und Navigationsgerät nach einem der vorhergehenden Ansprüche, dadurch gekennzeichnet, daß die Steuerung (29) die durch die Satellitenortung korrigierte Fahrzeugposition (31) mit benachbarten Straßenkartendaten (Map Matching) vergleicht und das Fahrzeug auf die aktuelle Position (33) der benachbarten Straße aufsetzt.

4. Ortungs- und Navigationsgerät nach einem der vorhergehenden Ansprüche, dadurch gekennzeichnet, daß die Satellitenortung auf der Anzeige (26) ausgebbar ist.

5. Ortungs- und Navigationsgerät nach einem der vorhergehenden Ansprüche, dadurch gekennzeichnet, daß die Steuerung (20) bei Ortungsverlust die neue Fahrzeugposition (31) durch die Satellitenortung initialisiert.

6. Ortungs- und Navigationsgerät nach einem der vorhergehenden Ansprüche, dadurch gekennzeichnet, daß die Steuerung (20) die neue Fahrzeugposition (31) zyklisch neu bestimmt.

7. Ortungs- und Navigationsgerät nach einem der vorhergehenden Ansprüche, dadurch gekennzeichnet, daß die aktuelle Position (33) des Fahrzeugs in der dargestellten Karte manuell durch Cursortasten verschiebbar ist oder durch Tastendruck um den Vektor V in Richtung der GPS-Position auf der dargestellten Karte verschiebbar ist.

8. Ortungs- und Navigationsgerät nach Anspruch 1, dadurch gekennzeichnet, daß die Steuerung (20) Mittel aufweist, mit denen eine Synchronisation der Signale des GPS-Empfängers (25) und der Signale der Koppelortungssensoren durchführbar ist.

9. Ortungs- und Navigationsgerät nach Anspruch 1, dadurch gekennzeichnet, daß die Steuerung (20) ausgebildet ist, die GPS-Koordinaten des GPS-Empfängers in das geographische Koordinatenbezugssystem der Koppelortung zu transformieren.

## Claims

1. Position-finding and navigation device for a vehicle having a magnetic field compass, a distance sensor and/or an angle sensor, a memory for road map data, a display for a road map, a satellite receiver for determining a vehicle position by satellite position-finding, and having a controller for determining a vehicle position by integrated position-finding and presenting this vehicle position on the road map on the display, the controller forming a tolerance region for the satellite position-finding, characterized in that the controller (20) has means using which the tolerance region (34) of the satellite position-finding (31) can be determined, in that the controller (20) is designed to check whether the vehicle position is inside or outside the tolerance region of the satellite position-finding (31), in that, if a vehicle position determined from integrated position-finding (30) is outside the tolerance region (34) of the satellite position-finding (31), the controller (20) first of all shifts the vehicle position from the integrated position-finding (30) to that from satellite position-finding (31), and in that, after a plausibility check by means of "map matching", the controller (20) then shifts the shifted vehicle position (31) to a current position (33; 53) on a road (32) on the displayed road map which runs approximately parallel to the vehicle's direction of motion.

2. Position-finding and navigation device according to Claim 1, characterized in that the means have a low-pass filter whose time constant can be chosen to take account of the accuracy of the satellite position-finding and the vehicle speed.

3. Position-finding and navigation device according to one of the preceding claims, characterized in that the controller (29) compares the vehicle position (31), corrected by satellite position-finding, with adjacent road map data (map matching), and places the vehicle at the current position (33) on the adjacent road.

4. Position-finding and navigation device according to one of the preceding claims, characterized in that the satellite position-finding can be output on the display (26).

5. Position-finding and navigation device according to one of the preceding claims, characterized in that, if the position is lost, the controller (20) initializes the new vehicle position (31) by satellite position-finding.

6. Position-finding and navigation device according to one of the preceding claims, characterized in that the controller (20) determines the new vehicle position (31) again cyclically.

7. Position-finding and navigation device according to one of the preceding claims, characterized in that the current position (33) of the vehicle on the displayed map can be shifted manually by cursor keys or can be shifted, by pressing keys, through the vector V in the direction of the GPS position on the displayed map.

8. Position-finding and navigation device according to Claim 1, characterized in that the controller (20) has means using which it is possible to synchronize the signals from the GPS receiver (25) and the signals from the integrated position-finding sensors.

9. Position-finding and navigation device according to Claim 1, characterized in that the controller (20) is designed to transform the GPS co-ordinates from the GPS receiver into the geographic co-ordinate reference system for integrated position-finding.

## Revendications

1. Appareil de localisation et de navigation de véhicule, comprenant un compas magnétique, un capteur de distance et/ou un capteur d'angle, une mémoire pour les données des cartes routières, un affichage pour une carte routière, un récepteur satellite pour déterminer une position du véhicule par localisation par satellite, et une commande pour déterminer une position du véhicule par une localisation couplée et une représentation de cette position du véhicule sur la carte routière de l'affichage,
la commande pour la localisation par satellite formant une plage de dispersion,
caractérisé en ce que

- la commande (20) comprend des moyens à l'aide desquels se détermine la plage de dispersion (34) de la localisation par satellite (31),

- la commande (20) est réalisée pour contrôler si la position du véhicule se situe à l'intérieur ou à l'extérieur de la plage de dispersion de la localisation par satellite (31),
- en cas de localisation par couplage (30) de la position du véhicule à l'extérieur de la plage de dispersion (34) de la localisation par satellite (31), la commande (20) déplace tout d'abord la position du véhicule selon la localisation couplée (30), sur celle de la localisation par satellite (31), et ensuite
- la commande (20) après un contrôle de plausibilité à l'aide d'une carte de concordance, déplace la position du véhicule (31), décalée dans une position actuelle (33 ; 53) sur une route (32) de la carte routière représentée, et qui est sensiblement parallèle à la direction du véhicule.

2. Appareil de localisation et de navigation selon la revendication 1,
caractérisé en ce que
les moyens comprennent un filtre passe-bas dont la constante de temps est choisie en fonction de la précision de la localisation par satellite et de la vitesse du véhicule.

3. Appareil de localisation et de navigation selon l'une des revendications précédentes,
caractérisé en ce que
la commande (29) compare la position (31) du véhicule, corrigée par la localisation par satellite, aux données de cartes routières voisines (concordance de carte) et place le véhicule sur la position actuelle (33) de la route voisine.

4. Appareil de localisation et de navigation selon l'une des revendications précédentes,
caractérisé en ce que
la localisation par satellite apparaît sur l'affichage (26).

5. Appareil de localisation et de navigation selon l'une quelconque des revendications précédentes,
caractérisé en ce que
la commande (20) initialise la nouvelle position (31) du véhicule par la localisation par satellite, en cas de perte de localisation.

6. Appareil de localisation et de navigation selon l'une quelconque des revendications précédentes,
caractérisé en ce que
la commande (20) définit à nouveau de manière cyclique la nouvelle position (31) du véhicule.

7. Appareil de localisation et de navigation selon l'une quelconque des revendications précédentes,

caractérisé en ce que
la position actuelle (33) du véhicule est déplacée manuellement par des touches de curseurs, sur la carte représentée, ou par enfoncement d'une touche pour déplacer le vecteur (V) dans la direction de la position (GPS) sur la carte affichée.

8. Appareil de localisation et de navigation selon la revendication 1,
caractérisé en ce que
la commande (20) comprend des moyens à l'aide desquels on effectue une synchronisation des signaux de récepteur (GPS) (25) et des signaux de capteurs de localisation par couplage.

9. Appareil de localisation et de navigation selon la revendication 1,
caractérisé en ce que
la commande (20) est réalisée pour transformer les coordonnées (GPS) du récepteur (GPS) vers le système de coordonnées de références géographiques de la localisation par couplage.

FIG. 1

FIG. 2

FIG. 3

FIG. 4

FIG. 5

FIG. 6